# EUROPEAN PATENT APPLICATION

(11) **EP 1 257 012 A2**
(43) Date of publication of application: **13.11.2002**
(21) Application number: 02010082.2
(22) Date of filing: 06.05.2002
(51) Int. Cl.: H01R 13/627

(54) **Optical junction connector**

(30) Priority: 08.05.2001 JP 2001137391
(71) Applicant: AUTONETWORKS TECHNOLOGIES, LTD., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Nakura, Yuji, c/oAutoNetworks Technologies Ltd., Nagoya-shi, Aichi (JP); Asada, Kazuhiro, c/oAutoNetworks Technologies Ltd., Nagoya-shi, Aichi (JP)
(74) Representative: Winter, Brandl, Fürniss, Hübner, Röss, Kaiser, Polte Partnerschaft

(57) **Abstract**

A ferrule portion is formed on and projects froma first connector housing, and a plurality of fiber insertion holes for respectively holding end portions of optical fibers are formed in the ferrule portion. End portions of a plurality of optical fibers are held in a second connector housing, and this second connector housing has a ferrule guide hole for receiving the ferrule portion so as to guide the end portions of the optical fibers, held in the ferrule portion, toward the end portions of the optical fibers, held in the second connector housing, respectively. The ferrule portion is formed into a generally oval transverse cross-sectional shape, and the ferrule guide hole is formed into a generally oval transverse cross-sectional shape corresponding to the oval transverse cross-sectional shape of the ferrule portion.

## Description

### BACKGROUND OF THE INVENTION

### Field of the Invention

This invention relates to an optical junction connector device and an optical junction connector used in the field of optical communication for an OA equipment, an FA equipment, an on-vehicle equipment and so on.

### Background Art

In a conventional optical junction connector for connecting optical fibers together, the single optical fiber is received and held in a single ferrule. When the ferrule of the optical junction connector is inserted into a ferrule receiving portion of a mating optical junction connector, and is connected thereto, the optical fiber, held in the ferrule, is butted against the optical fiber, held in the ferrule receiving portion, and is optically connected thereto.

However, when the number of optical fibers to be connected increased, it was necessary to use a plurality of pairs of optical junction connectors or to provide a plurality of ferrules in a single optical junction connector, and because of the increased number of the component parts, the complicated shape and so on, the efficiency of the connecting operation was lowered, and the cost increased.

However, if there is used a construction in which a plurality of optical fibers are received and held in each of a cylindrical ferrule and a ferrule receiving portion, and the plurality of pairs of optical fibers are connected in a butted manner, there is a fear that in the connected condition, the ferrule is turned within the ferrule receiving portion, so that the axes of each mating pair of optical fibers are disposed out of alignment with each other at their connected ends, and this would be the cause of an increased connection loss.

### SUMMARY OF THE INVENTION

The above problems have been solved by an optical junction connector device according to a first aspect of the invention, which comprises a first optical junction connector including a first connector housing, and a ferrule formed on and projecting from the first connector housing, the ferrule having a plurality of fiber insertion holes for respectively receiving end portions of optical fibers; and a second optical junction connector including a second connector housing for holding end portions of a plurality of optical fibers, the second connector housing having a ferrule guide hole for receiving the ferrule so as to guide the end portions of the optical fibers, received in the ferrule, toward the end portions of the optical fibers, held in the second connector housing, respectively; wherein the ferrule is formed into a non-circular transverse cross-sectional shape, and the ferrule guide hole is formed into a non-circular transverse cross-sectional shape corresponding to the non-circular transverse cross-sectional shape of the ferrule.

According to another aspect of the invention, preferably, the ferrule has a generally oval transverse cross-sectional shape, and the ferrule guide hole has a generally oval transverse cross-sectional shape corresponding to the oval transverse cross-sectional shape of the ferrule.

According to another aspect of the invention, preferably, an elongate guide projection is formed on one of an outer peripheral surface of the ferrule and an inner peripheral surface of the ferrule guide hole, and extends in a direction of inserting connection of the ferrule and the ferrule guide hole to each other, whereas a guide groove for receiving the elongate guide projection so as to guide the same in the direction of inserting connection is formed in the other.

According to another aspect of the invention, preferably, the first connector housing includes a protecting hood portion which projects forwardly beyond the ferrule in surrounding relation thereto. According to another aspect of the invention, preferably, the ferrule guide hole is formed in a ferrule receiving portion formed on and projecting from the second connector housing, and the protecting hood portion is so shaped as to be fitted on the ferrule receiving portion.

According to another aspect of the invention, there is provided an optical junction connector including a connector housing, and a ferrule formed on and projecting from the connector housing, the ferrule having a plurality of fiber holding holes for respectively receiving end portions of optical fibers; wherein the ferrule is formed into a non-circular transverse cross-sectional shape.

According to a further aspect of the invention, there is provided an optical junction connector including a connector housing for holding end portions of a plurality of optical fibers, the connector housing having a ferrule guide hole; wherein the ferrule guide hole is formed into a non-circular transverse cross-sectional shape.

### BRIEF DESCRIPTION OF THE DRAWINGS

Fig. 1 is a perspective view showing a preferred embodiment of an optical junction connector device of the present invention.
Fig. 2 is an exploded, perspective view of the optical junction connector device.
Fig. 3 is a cross-sectional view of the optical junction connector device.
Fig. 4A is a front-elevational view of a first optical junction connector, Fig. 4B is a plan view of the first optical junction connector, and Fig. 4C is a side-elevational view of the first optical junction connector.
Fig. 5A is a partly-broken, side-elevational view of a second optical junction connector, Fig. 5B is a plan view of the second optical junction connector, and Fig. 5C is a front-elevational view of the second optical junction connector.
Fig. 6 is an exploded, perspective view of the second optical junction connector.
Fig. 7A is a front-elevational view of a first optical junction connector according to a first modified form of the invention, Fig. 7B is a plan view of this first optical junction connector, and Fig. 7C is a side-elevational view of this first optical junction connector.
Fig. 8A is a front-elevational view of a first optical junction connector according to a second modified form of the invention, Fig. 8B is a plan view of this first optical junction connector, and Fig. 8C is a side-elevational view of this first optical junction connector.
Fig. 9A is a partly-broken, side-elevational view of a second optical junction connector according to the second modified form of the invention, Fig. 9B is a plan view of this second optical junction connector, and Fig. 9C is a front-elevational view of this second optical junction connector.

### DETAILED DESCRIPTION OF THE PREFERRED EMBODIMENTS

A preferred embodiment of an optical junction connector device of the present invention will now be described.

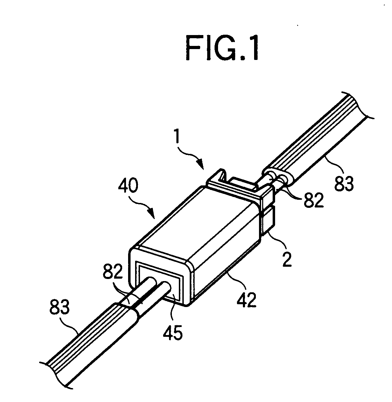

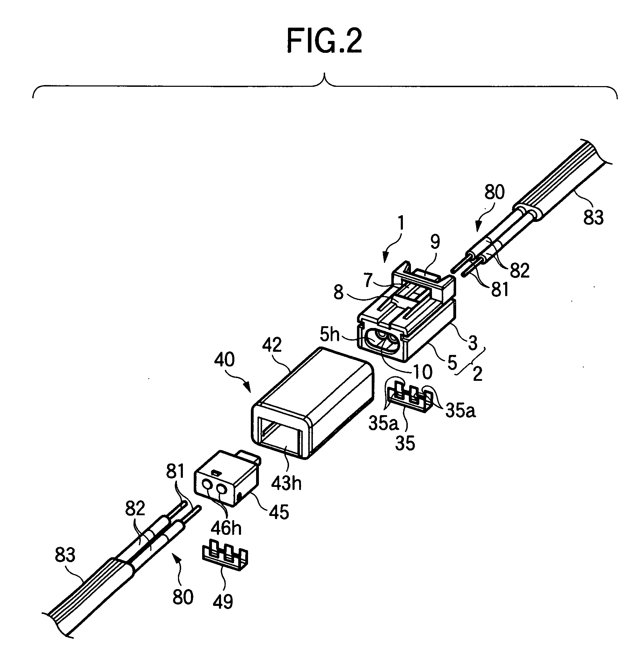

As shown in Figs. 1 to 3, this optical junction connector device comprises a first optical junction connector 1 and a second optical junction connector 40 which can be connected together.

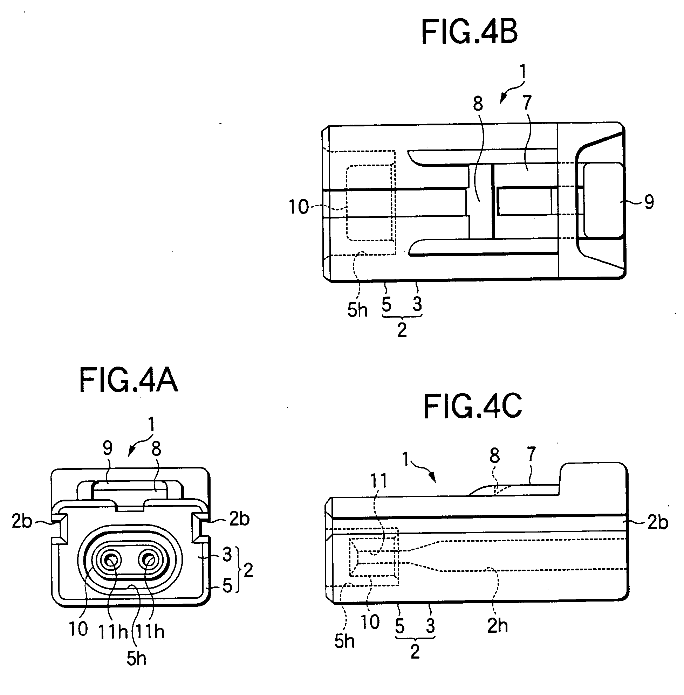

As shown in Figs. 1 to 3 and Figs. 4A to 4C, the first optical junction connector 1 includes a first connector housing 2, and a ferrule portion 10 of a generally pillar-shape formed on and projecting from this connector housing 2.

The first connector housing 2 is made of a resin or the like, and the ferrule portion 10 is integrally formed in a projected manner on a front portion of a housing body portion 3 of a generally rectangular parallelepiped shape flattened in a direction of the width thereof. A protecting hood portion 5 is formed integrally on this housing body portion in surrounding relation to the ferrule portion 10.

The ferrule portion 10 is formed into a pillar-like body of a generally oval transverse cross-sectional shape (that is, a generally oval shape when viewed from the front side thereof) flattened in the direction of the width. A plurality of fiber insertion holes 11h each for receiving an optical fiber 81, exposed at an end portion of an optical fiber cord 80, are formed in the ferrule portion 10, and extend along the axis of the ferrule portion. In this embodiment, a pair of right and left fiber insertion holes 11h is formed in the ferrule portion 10. A pair of cord receiving holes 2h for respectively receiving sheaths 82 of the optical fiber cords 80 are formed in the first connector housing 2, and are disposed rearward of the fiber insertion holes 11h in coaxial relation thereto, respectively. When the pair of optical fiber cords 80, each having the optical fiber 81 exposed at its end portion, are inserted into the respective cord receiving holes 2h and the respective fiber insertion holes 11h from the rear side of the first connector housing 2, the end portions of the optical fibers 81, exposed respectively at the end portions of the optical fiber cords 80, are inserted and held in the fiber insertion holes 11h, respectively, and at the same time those portions of the sheaths 82, disposed immediately adjacent respectively to the exposed end portions of the optical fibers 81, are inserted and held in the cord receiving holes 2h, respectively. In this condition, the optical fiber cords 80 are positioned and held by retaining means such as a predetermined stopper or an adhesive. In this embodiment, the sheaths 82 are engaged respectively in engagement grooves 35a of a generally U-shape formed in a stopper 35, thereby positioning and holding the optical fiber cords 80. The end surfaces of the optical fibers 81, disposed at the distal end of the ferrule portion 10, are subjected to a mirror finished processing. Those portions of the pair of optical fiber cords 80, extending rearward from the first connector housing 2, are covered with a sheath 83, and are held in parallel, contiguous relation to each other.

The ferrule portion 10 may be separate from the first connector housing 2, and may be supported on the front end of the housing body 3 in a projected manner, with its proximal end embedded in this front end.

The protecting hood portion 5 projects forwardly beyond the distal end of the ferrule portion 10 in surrounding relation thereto. The end surfaces of the optical fibers 81, exposed at the distal end of the ferrule portion 10, are protected by this protecting hood portion 5.

The protecting hood portion 5 is so shaped as to fit on a ferrule receiving portion 50 (described later). More specifically, an insertion hole 5h of a generally oval transverse cross-sectional shape, corresponding to the shape of the outer peripheral surface of the ferrule receiving portion 50, is formed in the protecting hood portion 5. When the ferrule portion 10 is inserted into the ferrule receiving portion 50, the protecting hood portion 5 is fitted on the ferrule receiving portion 50.

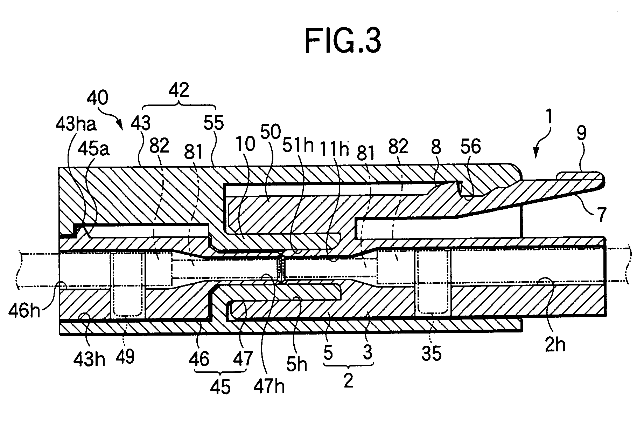

An engagement piece portion 7 is formed on the upper surface of the first connector housing 2, and extends rearwardly from the front portion of this first connector housing. An upwardly-projecting engagement projection 8 is formed on a middle portion of the engagement piece portion 7, and an operating portion 9 is formed at a rear end of the engagement piece portion 7. When the first optical junction connector 1 and the second optical junction connector 40 are connected together, the engagement projection 8 is engaged with an engagement projection 56 on the second optical junction connector 40, thereby maintaining the mutually-connected condition of the first and second optical junction connectors 1 and 40 (see Fig. 3). In this condition, when the operating portion 9 is pressed down to elastically deform the engagement piece portion 7 downwardly, the engagement of the engagement projection 8 with the engagement projection 56 is canceled, so that the connection between the first and second optical junction connectors 1 and 40 is canceled.

Guide grooves 2b of a channel-shaped cross-section are formed respectively in opposite side surfaces of the first connector housing 2, and these guide grooves 2b can receive elongate guide projections 55b, formed on a second connector housing 42 (described later) , respectively, so as to guide these elongate guide projections 55b in a direction of connection of the mating second optical junction connector 40.

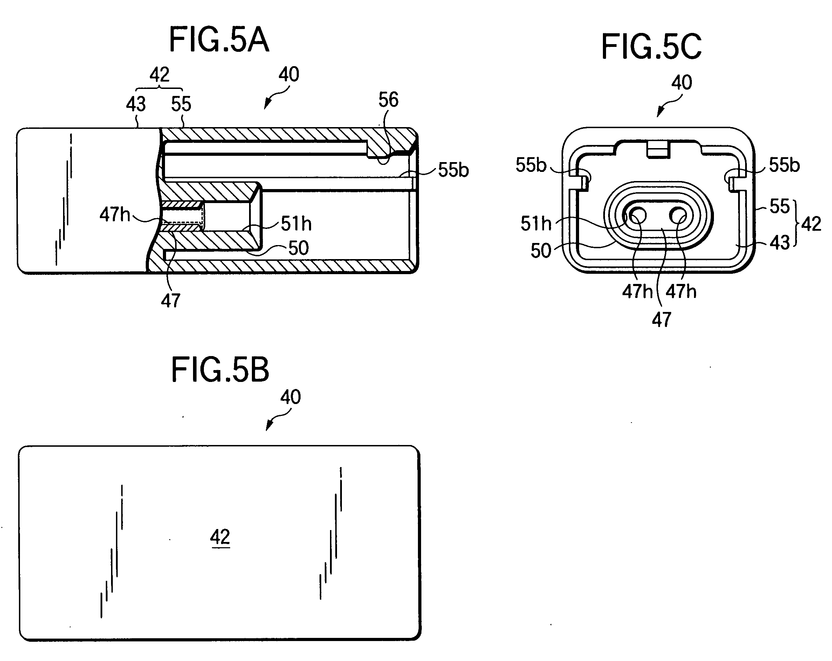

As shown in Figs. 1 to 3 and Figs. 5A to 5C, the second optical junction connector 40 includes the second connector housing 42 in which a ferrule guide hole 51h is formed.

The second connector housing 42 is made of a resin or the like, and the ferrule receiving portion 50 is integrally formed in a projected manner on a front portion of a housing body portion 43 of a generally rectangular parallelepiped shape flattened in a direction of the width thereof. A housing hood portion 55 is formed integrally on this housing body portion in surrounding relation to the ferrule receiving portion 50.

End portions of a plurality of optical fibers 81 are held in the housing body portion 43. In this embodiment, that is, in a specific formof the invention described below, end portions of a pair of optical fibers 81 are held in this housing body portion, and are exposed to the ferrule guide hole 51h.

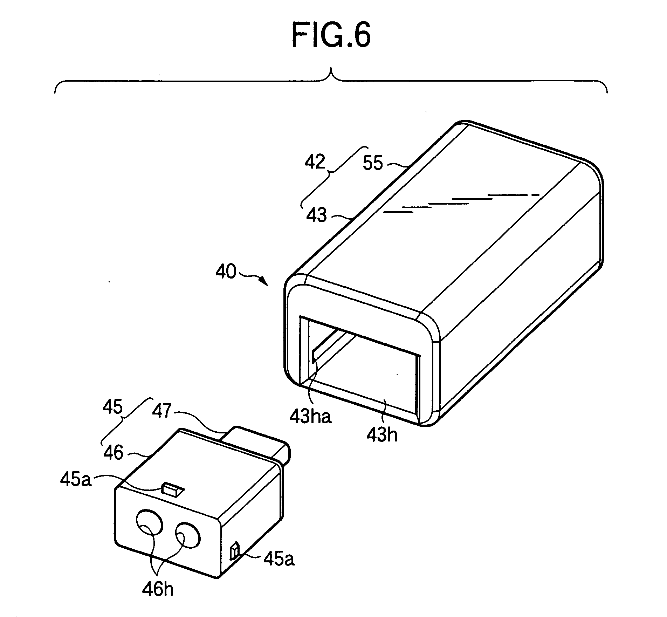

More specifically, a receiving hole 43h is formed in the housing body portion 43, and is open to a rear end thereof, and a fiber holding member 45 is received and held in this receiving hole 43h (see Figs. 3 and 6). The fiber holding member 45 includes a body portion 46 of a generally rectangular parallelepiped shape flattened in a direction of the width thereof, and a fiber end-holding portion 47 is formed on and projects from a front end of this body portion 46. The fiber end-holding portion 47 is formed into a pillar-like body of a generally oval transverse cross-sectional shape flattened in a direction of the width thereof. A pair of right and left fiber insertion holes 47h each for receiving the optical fiber 81, exposed at an end portion of an optical fiber cord 80, are formed in the fiber end-holding portion 47, and extend along the axis of this fiber end-holding portion. A pair of cord receiving holes 46h for respectively receiving sheaths 82 of the optical fiber cords 80 are formed in the body portion 46, and are disposed rearward of the fiber insertion holes 47h in coaxial relation thereto, respectively. When the pair of optical fiber cords 80, each having the optical fiber 81 exposed at its end portion, are inserted into the respective cord receiving holes 46h and the respective fiber insertion holes 47h from the rear side of the fiber holding member 45, the end portions of the optical fibers 81, exposed respectively at the end portions of the optical fiber cords 80, are inserted and held in the fiber insertion holes 47h, respectively, and at the same time those portions of the sheaths 82, disposed immediately adjacent respectively to the exposed end portions of the optical fibers 81, are inserted and held in the cord receiving holes 46h, respectively. In this condition, the optical fiber cords 80 are positioned and held by retaining means such as a predetermined stopper or an adhesive. In this embodiment, the optical fiber cords are positioned and held by the use of a stopper 49 similar to the stopper 35.

Engagement projections 45a are formed respectively on opposite side surfaces and an upper surface of the fiber holding member 45 at a rear portion thereof. Engagement grooves 43ha of a channel-shaped cross-section, in which the engagement projections 45a are engageable, respectively, are formed respectively in opposite inner side surfaces and an inner upper surface of the receiving hole 43h in the housing body portion 43. The fiber holding member 45 is pushed into the receiving hole 43h from the rear side of the housing body portion 43, and is abutted at its front surface against an inner end surface of the receiving hole 43h, with the engagement projections 45a engaged respectively in the engagement grooves 43ha, and in this manner, the fiber holding member 45 is received and held in the receiving hole 43h.

The ferrule receiving portion 50 is formed into pillar-like body of a generally oval transverse cross-sectional shape, and the ferrule guide hole 51h is formed in this ferrule receiving portion, and extends along the axis thereof. The ferrule guide hole 51h also has a generally oval transverse cross-sectional shape, and an inner portion of this ferrule guide hole is so shaped as to receive the fiber end-holding portion 47. When the fiber holding member 45 is inserted in the receiving hole 43h, the fiber end-holding portion 47 is inserted into the ferrule guide hole 51h from the inner end side thereof, and the distal end of the fiber end-holding portion 47 is disposed at a generally middle portion of the ferrule guide hole 51h (see Fig. 3). As a result, the end portions of the optical fibers 81, held in the fiber end-holding portion 47, are held in the inner end portion of the ferrule guide hole 51h in such a posture as to be butted respectively against the optical fibers 81 held in the ferrule portion 10. The distal end portion of the ferrule guide hole 51h is so shaped as to receive the ferrule portion 10, and when the first and second optical junction connectors 1 and 40 are connected together, the ferrule portion 10 is inserted into the ferrule guide hole 51h from the distal end side thereof, and the distal end of the ferrule portion 10 is butted against the distal end of the fiber end-holding portion 47, so that the pair of optical fibers 81 in the ferrule portion 10 are optically connected respectively to the pair of optical fibers 81 in the fiber end-holding portion 47.

The housing hood portion 55 has such a generally rectangular tubular shape as to fit on the first connector housing 2.

The engagement projection 56 for engagement with the engagement projection 8 on the first connector housing 2 is formed on an inner upper surface of the housing hood portion 55 at a front end thereof. When the first and second optical junction connectors 1 and 40 are connected together, the engagement projection 8 is engaged with the engagement projection 56, thereby maintaining the connected condition of the first and second optical junction connectors 1 and 40.

The elongate guide projections 55b for insertion respectively into the guide grooves 2b are formed on opposite inner side surfaces of the housing hood portion 55, respectively. When the first and second optical junction connectors 1 and 40 are connected together, the elongate guide projections 55b are inserted respectively into the guide grooves 2b, and are guided by these guide grooves, respectively, and therefore the first and second optical junction connectors 1 and 40, while guided without being inclined relative to each other, are connected together.

The operation for connecting the first and second optical junction connectors 1 and 40 together is carried out in the following manner.

Namely, when the first and second optical junction connectors 1 and 40 are connected together, first, the protecting hood portion 5 of the first connector housing 2 is fitted into the housing hood portion 55 of the second connector housing 42. At this time, the elongate guide projections 55b on the second connector housing 42 are inserted into and guided by the guide grooves 2b, formed in the first connector housing 2, respectively. When the first connector housing 2 is further inserted deeper into the second connector housing 42, the protecting hood portion 5 is fitted on the ferrule receiving portion 50, and then the ferrule portion 10 is inserted into the ferrule guide hole 51h in the ferrule receiving portion 50. When the first connector housing 2 is inserted into the predetermined deepest position within the second connector housing 42, the distal end of the ferrule portion 10 is butted against the distal end of the fiber end-holding portion 47 within the ferrule guide hole 51h, so that the pair of optical fibers 81 in the ferrule portion 10 are optically connected respectively to the pair of optical fibers 81 in the fiber end-holding portion 47. At this time, the engagement projection 8 is engaged with the engagement projection 56, thereby holding the first and second optical junction connectors 1 and 40 against withdrawal from each other.

In this condition, when the operating portion 9 is pressed down, the engagement of the engagement projection 8 with the engagement portion 56 is canceled, so that the connection between the first and second optical junction connectors 1 and 40 is canceled.

In the optical junction connector device of the above construction, the plurality of fiber insertion holes 11h are formed in the single ferrule portion 10, and when this ferrule portion 10 is inserted into the ferrule guide hole 51h to be connected thereto, each mating pair of optical fibers 81 are connected together. Therefore, the optical junction connectors 1 and 40 can be formed into a smaller size as compared with the conventional optical junction connector in which one optical fiber is held in one ferrule. And besides, the number of the component parts can be reduced, and the shape can be simplified as compared with the conventional optical junction connector.

In addition, the ferrule portion 10 has the generally oval transverse cross-sectional shape, and the ferrule guide hole 51h has the generally oval transverse cross-sectional shape corresponding to the transverse cross-sectional shape of the ferrule portion 10. Therefore, when the ferrule portion 10 is inserted in the ferrule guide hole 51h, the ferrule portion 10 is prevented from turning about its axis within the ferrule guide hole 51h. Therefore, the misalignment of the axes of the optical fibers 81 (held respectively in the fiber insertion holes 11h in the ferrule portion 10 of the first optical junction connector 1) relative to the axes of the optical fibers 81 (held in the second optical junction connector 40) due to the turning movement of the ferrule portion is prevented, and a loss of connection between each mating pair of optical fibers can be reduced as much as possible.

In this embodiment, the ferrule portion 10 has the generally oval transverse cross-sectional shape, and the ferrule guide hole 51h has the generally oval transverse cross-sectional shape corresponding to the transverse cross-sectional shape of the ferrule portion 10. However, it is not always necessary to form these into such a generally oval transverse cross-sectional shape. For example, the ferrule portion 10 and the ferrule guide hole 51h may be formed into a polygonal transverse cross-sectional shape, such as a generally triangular or a generally square shape, or a generally key hole-like transverse cross-sectional shape (in which case the ferrule portion 10 includes a generally cylindrical body, and a rotation-preventing projection formed on one side of an outer peripheral surface of this cylindrical body, and the ferrule guide hole 51h has a circular transverse cross-sectional shape, and a groove for receiving the rotation-preventing projection is formed in an inner peripheral surface of this ferrule guide hole). Namely, the ferrule portion 10, as well as the ferrule guide hole 51h, is formed into a non-circular transverse cross-sectional shape so that the ferrule portion 10, when inserted in the ferrule guide hole 51h, will not turn or rotate about the axis thereof.

The first connector housing 2 includes the protecting hood portion 5 which projects forwardly beyond the distal end of the ferrule portion 10 in surrounding relation thereto, and therefore the end surfaces of the optical fibers 81, exposed at the distal end of the ferrule portion 10, can be protected by the protecting hood portion 5 . Therefore, the optical fibers 81 are prevented from damage and the like.

And besides, the protecting hood portion 5 is so shaped as to fit on the ferrule receiving portion 50, and therefore when the first and second optical junction connectors 1 and 40 are connected together, the protecting hood portion 5 is fitted on the ferrule receiving portion 50. Therefore, the ferrule can be more firmly kept inserted in the ferrule guide hole. Therefore, the ferrule portion 10 is prevented from jolting in the ferrule guide hole 51h, and also the mechanical strength of connection between the ferrule portion 10 and the ferrule receiving portion 50 can be increased. And besides, by preventing such jolting, a connection loss can be stably kept to a low level.

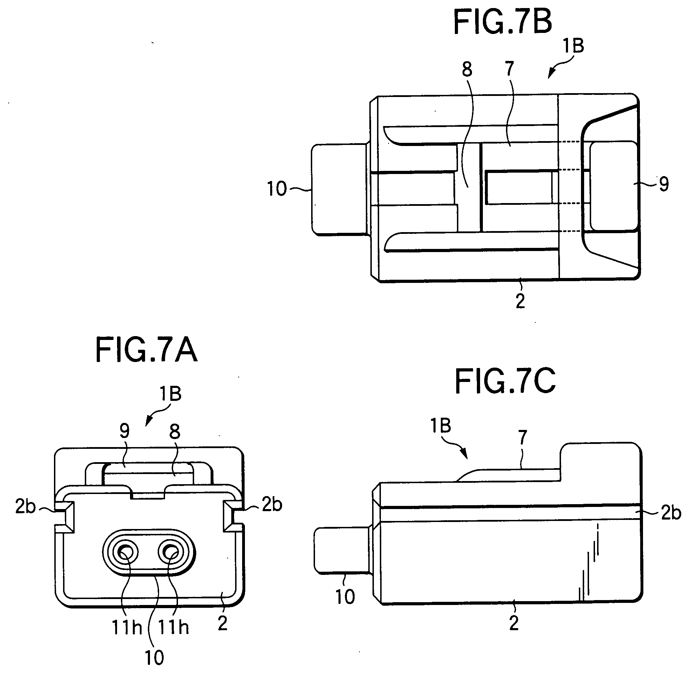

However, the protecting hood portion 5 is not an essential constituent element, and the provision of the protecting hood portion 5 may be omitted as in a first optical junction connector 1B of a first modification shown in Figs. 7A to 7C. This first optical junction connector 1B is similar in construction to the first optical junction connector 1 except that the provision of the protecting hood portion 5 is omitted. In this case, with respect to the second optical junction connector 40, the ferrule guide hole 51h does not need to be formed in the ferrule receiving portion 50 formed in a projected manner on the second connector housing 42, and a ferrule guide hole may be formed directly in the housing body portion 43 of the second connector housing 42.

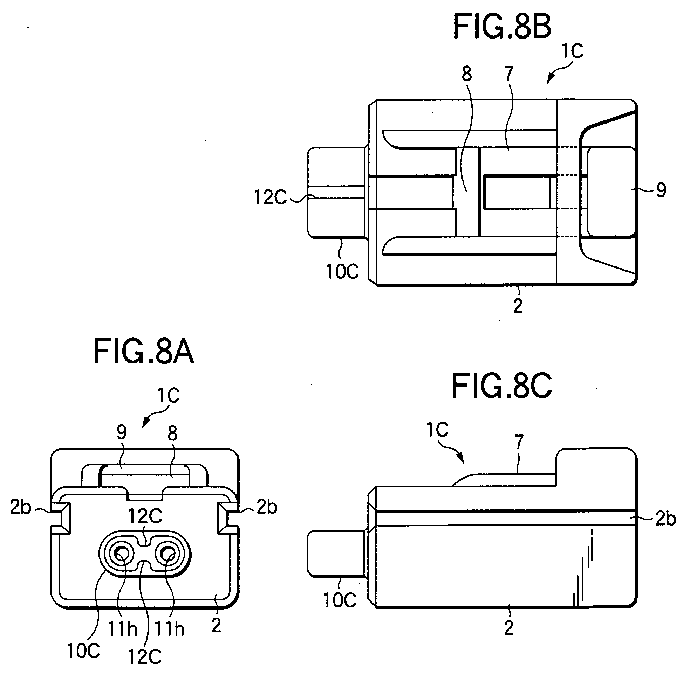

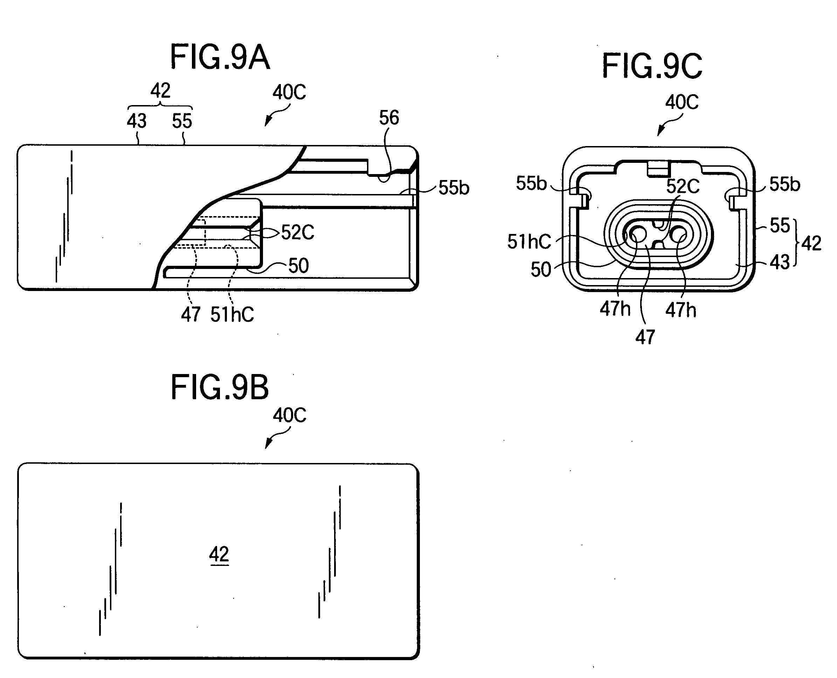

Figs. 8A to 8C and Figs. 9A to 9C show an optical junction connector device of a second modification in which elongate guide projections 52c are formed on one of an outer peripheral surface of a ferrule portion 10C and an inner peripheral surface of a ferrule guide hole 51hC, and extend in a direction of inserting connection of the ferrule portion to the ferrule guide hole, whereas guide grooves 12C for respectively receiving the elongate guide projections 52C so as to guide the same in the direction of inserting connection are formed in the other. The optical junction connector device of this second modification is similar in construction to the optical junction connector device of the above embodiment except the following differences and except that the provision of the protecting hood portion 5 is omitted.

In this second modification, the guide grooves 12C are formed respectively in upper and lower portions of the outer peripheral surface of the ferrule portion 10C of a first optical junction connector 1C (shown in Figs. 8A to 8C), and extend in the direction of inserting connection (in the direction of the axis of the ferrule portion 10C), the guide grooves 12C being disposed centrally of the width of the ferrule portion 10C. The elongate guide projections 52C for insertion respectively into the guide grooves 12C so as to slide therealong are formed respectively on upper and lower portions of the inner peripheral surface of the ferrule guide hole 51hC, and extend in the direction of inserting connection (in the direction of the axis of the ferrule guide hole 51hC), the elongate guide projections 52C being disposed centrally of the width of the ferrule guide hole 51hC.

In this optical junction connector device, when the first optical junction connector 1C and the second optical junction connector 40C are connected together, the ferrule portion 10C is inserted into the ferrule guide hole 51hC while the elongate guide projections 52C are inserted respectively into the guide grooves 12C, and are guided by these guide grooves, respectively. Therefore, ends of optical fibers 81 in the ferrule portion 10C are more positively guided respectively toward ends of optical fibers 81 in the ferrule guide hole 51hC, and the misalignment of the optical axes of each mating pair of optical fibers 81 relative to each other is more positively prevented, so that a loss of connection between each mating pair of optical fibers 81 can be reduced as much as possible.

The optical junction connector 1C, shown in Figs. 8A to 8C, may be provided with a protecting hood portion similar to the protecting hood portion 5 of the above embodiment.

As described above, in the optical junction connector device, the ferrule is formed into the non-circular transverse cross-sectional shape, and the ferrule guide hole is formed into the non-circular transverse cross-sectional shape corresponding to the non-circular transverse cross-sectional shape of the ferrule. Therefore, the ferrule, when inserted in the ferrule guide hole, is prevented from turning about its axis within the ferrule guide hole. Therefore, when connecting the plurality of mating pairs of optical fibers by the use of the single ferrule, the misalignment of the axes of the optical fibers (held respectively in the fiber insertion holes in the ferrule of the first optical junction connector) relative to the axes of the optical fibers (held in the second optical junction connector) due to the turning movement of the ferrule is prevented, and a loss of connection between each mating pair of optical fibers can be reduced as much as possible.

In the optical function connector device, the ferrule is inserted into the ferrule receiving portion while the elongate guide projection is inserted in and guided by the guide groove. Therefore, the end portions of the optical fibers in the ferrule are more positively guided respectively toward the end portions of the optical fibers in the ferrule receiving portion, and the misalignment of the optical axes of each mating pair of optical fibers relative to each other is more positively prevented, so that a loss of connection between each mating pair of optical fibers can be reduced as much as possible.

In the optical junction connector device, the first connector housing includes the protecting hood portion which projects forwardly beyond the distal end of the ferrule in surrounding relation thereto. Therefore, the end surfaces of the optical fibers, exposed at the distal end of the ferrule, can be protected by this protecting hood portion.

In the optical junction connector device, the ferrule guide hole is formed in the ferrule receiving portion formed on and projecting from the second connector housing, and the protecting hood portion is so shaped as to be fitted on this ferrule receiving portion. Therefore, the ferrule can be more firmly kept inserted in the ferrule guide hole.

In the optical junction connector, the ferrule is formed into the non-circular transverse cross-sectional shape. Therefore, when the ferrule is inserted into the ferrule guide hole having the non-circular transverse cross-sectional shape corresponding to the non-circular transverse cross-sectional shape of the ferrule, the ferrule is prevented from turning about its axis within the ferrule guide hole. Therefore, the misalignment of the axes of the optical fibers (in the ferrule) relative to the axes of the optical fibers (which are held in the ferrule guide hole, and are to be connected respectively to the above optical fibers) due to the turning movement of the ferrule is prevented, and a loss of connection between each mating pair of optical fibers can be reduced as much as possible.

In the optical junction connector, the ferrule guide hole is formed into the non-circular transverse cross-sectional shape. Therefore, when the ferrule, having the non-circular transverse cross-sectional shape corresponding to the non-circular transverse cross-sectional shape of the ferrule guide hole, is inserted into the ferrule guide hole, the ferrule is prevented from turning about its axis within the ferrule guide hole. Therefore, the misalignment of the axes of the optical fibers (in the ferrule) relative to the axes of the optical fibers (which are held in the ferrule guide hole, and are to be connected respectively to the above optical fibers) due to the turning movement of the ferrule is prevented, and a loss of connection between each mating pair of optical fibers can be reduced as much as possible.

## Claims

1. An optical junction connector device comprising:
a first optical junction connector including a first connector housing, and a ferrule formed on and projecting from the first connector housing, the ferrule having a plurality of fiber insertion holes for respectively receiving end portions of first optical fibers; and
a second optical junction connector including a second connector housing for holding end portions of a plurality of second optical fibers;
wherein
the second connector housing having a ferrule guide hole for receiving the ferrule to guide the end portions of the first optical fibers toward the end portions of the second optical fibers respectively;
the ferrule is formed into a non-circular transverse cross-sectional shape; and
the ferrule guide hole is formed into a non-circular transverse cross-sectional shape corresponding to the non-circular transverse cross-sectional shape of the ferrule.

2. The optical junction connector device according to claim 1,
wherein
the ferrule has an oval transverse cross-sectional shape;
and
the ferrule guide hole has an oval transverse cross-sectional shape corresponding to the oval transverse cross-sectional shape of the ferrule.

3. The optical junction connector device according to claim 1,
wherein
an elongate guide projection is formed on one of an outer peripheral surface of the ferrule and an inner peripheral surface of the ferrule guide hole, and extends in a direction of inserting connection of the ferrule and the ferrule guide hole to each other, whereas a guide groove for receiving the elongate guide projection so as to guide the same in the direction of inserting connection is formed in the other.

4. The optical junction connector device according to claim 1,
wherein the first connector housing includes a protecting hood portion which projects forwardly beyond the ferrule in surrounding relation thereto.

5. The optical junction connector device according to claim 4,
wherein
the second connector housing has a ferrule receiving portion projecting therefrom;
the ferrule guide hole is formed in the ferrule receiving portion; and
the protecting hood portion is so shaped as to be fitted on the ferrule receiving portion.

6. An optical junction connector comprising:
a connector housing; and
a ferrule formed on and projecting from the connector housing;
wherein
the ferrule has a plurality of fiber holding holes for respectively receiving end portions of optical fibers; and
the ferrule is formed into a non-circular transverse cross-sectional shape.

7. An optical junction connector comprising
a connector housing for holding end portions of a plurality of optical fibers,
wherein
the connector housing having a ferrule guide hole; and
the ferrule guide hole is formed into a non-circular transverse cross-sectional shape.
